# EUROPÄISCHE PATENTSCHRIFT

(11) **EP 3 450 297 B1**
(45) Veröffentlichungstag und Bekanntmachung des Hinweises auf die Patenterteilung: **09.06.2021**
(21) Anmeldenummer: 18000657.9
(22) Anmeldetag: 07.08.2018
(51) Int. Cl.: B62M 9/10

(54) **KETTENRADTRÄGER UND MEHRFACH-KETTENRADANORDNUNG**
CHAIN WHEEL HOLDER AND MULTIPLE CHAIN WHEEL ASSEMBLY
SUPPORT DE ROUE À CHAÎNE ET DISPOSITIF DE ROUE À CHAÎNES MULTIPLES

(30) Priorität: 28.08.2017 DE 102017008074
(43) Veröffentlichungstag der Anmeldung: 06.03.2019
(73) Patentinhaber: SRAM Deutschland GmbH, 97424 Schweinfurt (DE)
(72) Erfinder: Reineke, Sebastian, 97422 Schweinfurt (DE)

(56) Entgegenhaltungen:
- EP-A1- 2 554 468
- EP-A2- 1 431 172
- US-A1- 2012 244 978
- US-B1- 6 264 575

## Beschreibung

Die Erfindung betrifft eine Mehrfach-Kettenradanordnung zur Montage an einer Hinterradnabe mit einer erhöhten Anzahl von Kettenrädern und einem Kettenblattträger.

Die Anzahl von Ritzeln (Kettenrädern) an hinteren Mehrfach-Ritzelanordnungen hat in den letzten Jahren immer weiter zugenommen. Elf oder zwölf Ritzel in Kombination mit einem, zwei oder drei vorderen Kettenblättern stellen gängige Fahrradantriebe dar. Modernere Antriebe verwenden sogar dreizehn oder vierzehn Ritzel, meist in Kombination mit einem oder zwei vorderen Kettenblättern. Die erhöhte Anzahl von Ritzeln bringt allerdings Probleme mit sich. So erhöhen sich mit der steigenden Anzahl von Ritzeln die axiale Gesamtbreite, das Gewicht und auch die Fertigungskosten der Mehrfach-Ritzelanordnung.

Neben der Anzahl der Ritzel hat sich auch die Größe der Ritzel bzw. deren Zähnezahl erhöht. Die größten Ritzel umfassen regelmäßig eine Anzahl von 42 und mehr Zähnen. Gerade das größte Ritzel kann 50 Zähne oder mehr aufweisen. Einhergehend mit dem erhöhten Durchmesser der Ritzel steigt das Gewicht weiter an. Außerdem sind besonders große Ritzel anfälliger, unter den Kettenkräften, die von der Kette über die Ritzel und den Antreiber auf die Hinterradnabe übertragen werden, nachzugeben.

Gleichzeitig ist der zur Verfügung stehende Bauraum vorgegeben und in axialer Richtung vom Antreiber, den Laufradspeichen und dem Rahmenanschluss begrenzt. Mehrfach-Ritzel an Hinterrädern von modernen Fahrrädern sind meist auf einem Antreiber an der Hinterradnabe montiert, der drehbar gegenüber der Nabenachse und gegenüber der Nabenhülse gelagert ist, wobei ein Freilauf zwischen Antreiber und Nabenhülse vorgesehen ist. Antreiber weisen Standardabmessungen auf, so dass die Mehrfach-Ritzel austauschbar sind.

Aus dem Stand der Technik sind verschiedene Ansätze bekannt, die lediglich eines oder wenige der obengenannten Probleme lösen. Es ist jedoch keine Mehrfach-Ritzelanordnung mit einer erhöhten Anzahl von 11, 12 oder mehr Ritzeln bekannt, die sowohl leicht, stabil, günstig herzustellen und eine axiale Breite aufweist, die die Montage auf einem vorgegebenen Standardantreiber erlaubt.

Beispielsweise ist es bekannt, leichte konische Ritzelanordnungen durch spanende Fertigung, insbesondere Fräsen oder Drehen, zu erzeugen. Diese Fertigung ist sehr material- und zeitaufwändig und damit auch teuer. Dabei werden schmale ringförmige Ritzel auf einem großen Radius einstückig oder mittels Stiften miteinander verbunden, wobei die radiale Abstützung gegenüber dem Antreiber an zwei axial voneinander beabstandeten Stellen erfolgt. Diese stellen bezüglich Gewicht und Stabilität ein Optimum dar. Allerdings sind die Herstellkosten hoch.

Kostengünstigere Ausführungsformen können Ritzelträger (Spider) umfassen, an denen mehrere Ritzel befestigt werden. Diese erwiesen sich allerdings als schwer und/oder instabil. Außerdem sind sie bei großen Zähnezahlen auch noch nicht für alle Genauigkeitsanforderungen ausreichend.

Dokument EP 1 431 172 A2 zeigt die Präambel des Anspruchs 1.

Einzelritzel mit großem Außendurchmesser und kleinem Innendurchmesser mit einem Profil zur Drehmomentübertragung auf den Antreiber, neigen besonders zum Verziehen gegenüber der Mittelebene des Ritzels. Dementsprechend kann die exakte axiale Position der Zähne nicht eingehalten werden. Außerdem weisen sie ein sehr hohes Gewicht auf.

Es stellt sich somit die Aufgabe, eine kostengünstige und einfach zu fertigende hintere Mehrfach-Kettenradanordnung bereitzustellen, die ausreichend stabil und dennoch leicht ausgebildet ist.

Gelöst wird diese Aufgabe mit einem Kettenradträger für eine Mehrfach-Kettenradanordnung nach Anspruch 1. Der Kettenradträger ist für die Nutzung in einer Mehrfach-Kettenradanordnung zur drehbaren Montage an einer Hinterradachse geeignet. Der Kettenradträger weist eine im Wesentlichen gleiche Materialstärke auf. Außerdem ist der Kettenradträger so ausgebildet, dass zumindest drei große Kettenräder am Träger befestigbar sind.

Mit gleicher Materialstärke ist die Materialstärke in axialer Richtung gemeint. Mit anderen Worten die Dicke des Blechs, aus dem der Träger geformt wird. Diese Ausführung erlaubt zum einen eine günstige Herstellung und aufgrund der durchgehend geringen Materialdicke auch ein niedriges Gewicht. Die ursprüngliche Materialdicke wird dabei so gewählt, dass eine gute Balance zwischen Stabilität und Gewicht gefunden wird.

Insbesondere wird der Träger aus einem ursprünglich gleichmäßig dicken Aluminiumblech in einem mehrstufigen Stanz-Biegeverfahren gefertigt. Durch das Verformen des zunächst flachen Blechteils entstehen verschiede Niveaus bzw. Stufen, welche dem Kettenradträger die nötige Stabilität verleihen. Die axiale Gesamthöhe (bzw. Gesamtbreite) des Trägers ist nach der Verformung wesentlich größer, als die Dicke des Ausgangsmaterials. Mit der anspruchsgemäßen Materialstärke ist also die Dicke des Materials, nicht die axiale Gesamthöhe des Trägers gemeint. Die Materialstärke kann dabei in manchen Bereichen des Trägers leicht variieren. So ist etwa das Profil zur Drehmomentübertragung etwas stärker und die Vorsprünge etwas weniger stark ausgebildet. Trotzdem ist die Materialstärke des Trägers im Wesentlichen gleich und unterscheidet sich deutlich von der Gesamtbreite des Trägers.

Das Aluminium wird erst nach dem Stanz-Biegeverfahren gehärtet. Dadurch lässt es sich zunächst leicht bearbeiten und bietet nach dem Härten genügend Stabilität.

Erfindungsgemäss weist der Kettenradträger an einem radial inneren Ende ein Profil zur Drehmomentübertagung auf. In radialer Richtung benachbart zu dem Profil zur Drehmomentübertragung ist ein Innenring ausgebildet. Das Profil ist zum Eingriff in den Antreiber ausgebildet. Für eine verbesserte Übertragung der Kräfte auf den Antreiber ist die axiale Materialstärke am Profil etwas größer als am übrigen Träger, also auch etwas größer als die Ausgangsmaterialstärke.

Gemäß einer Weiterbildung der Erfindung weist der Träger eine Mehrzahl von Trägerarmen auf. Die Trägerarme sind an einem radial äußeren Ende des Trägers durch einen Außenring verbunden. Insbesondere ist eine Anzahl von fünf Trägerarmen vorgesehen, die in gleichmäßigen Winkelabständen angeordnet sind.

Gemäß einer Weiterbildung der Erfindung erstrecken sich die Trägerarme in radialer Richtung zwischen dem Innenring und dem Außenring. Der Außenring bietet im Vergleich zu konventionellen Spidern, deren Trägerarme am radialen Ende nicht verbunden sind, mehr Stabilität. Eine Vielzahl von Materialdurchbrüchen, die sowohl im Bereich der Trägerarme, als auch im Bereich zwischen dem Innen- und Außenring des Trägers angeordnet sind, reduziert das Gewicht deutlich gegenüber einer durchgängigen Scheibe. Damit stellt der erfindungsgemäße Ritzelträger gewissermaßen eine Mischform zwischen runder Scheibe und Anordnung von mehreren, von der Befestigungsstelle am Antreiber ausgehenden Armen dar.

Gemäß einer Weiterbildung der Erfindung weist der Träger am radial äußeren Ende bzw. entlang des Außenrings eine Mehrzahl von Trägervorsprüngen auf. Die Trägervorsprünge erstrecken sich nach radial außen. Sie dienen der überlappenden Anbringung eines ersten großen, insbesondere größten Kettenblatts auf der axialen Trägerinnenseite und/oder eines zweiten großen Kettenblatts auf der axialen Trägeraußenseite. Insbesondere ist eine Anzahl von zehn Trägervorsprüngen vorgesehen. Diese können in gleichmäßigen Winkelabständen angeordnet sein. Insbesondere kann jeder zweite der zehn Trägervorsprünge in Umfangsrichtung einem der fünf Trägerarme zugeordnet sein. In anderen Worten schließt sich in radialer Richtung an jeden Trägerarm ein Trägervorsprung an. Zwischen jeweils benachbarten Trägerarmen kann ebenfalls ein Trägervorsprung angeordnet sein.

Gemäß einer Weiterbildung der Erfindung weist der Träger eine Mehrzahl von Stegen zur Abstützung auf. Die Stege erstrecken sich zwischen dem Außenring und dem Innenring. Die Stege dienen der Kraftaufnahme bzw. Weiterleitung. Die Stege erstrecken sich insbesondere jeweils vom Außenring im Bereich eines zwischen den Trägerarmen angeordneten Trägervorsprungs hin zu einem in Umfangsrichtung benachbarten Trägerarm. In Drehrichtung D der Mehrfach-Kettenradanordnung betrachtet liegt der benachbarte Trägerarm vor dem Trägervorsprung, so dass sich Stege schräg nach vorne erstrecken. Durch diese Ausrichtung wirken die Stege wie Druckstäbe und können Kräfte und Spannungen, die von der Kette auf das größte Kettenrad oder das zweitgrößte Kettenrad übertragen werden, aufnehmen und nach radial innen in Richtung Antreiber weiterleiten.

Kräfte, die in das dritte und vierte Kettenrad eingeleitet werden, werden direkt über die Trägerarme hin zum Antreiber geleitet. Die Zwischenräume zwischen benachbarten Trägerarmen könnten auch frei von Material (leicht aber instabil) oder komplett geschlossen (stabil aber schwer) ausgebildet sein. Die erfindungsgemäßen Stege stellen einen guten Kompromiss zwischen Festigkeit und Gewicht dar.

Ein weiterer Aspekt der Erfindung betrifft eine Kettenrad-Unterbaugruppe für eine Mehrfach-Kettenradanordnung zur drehbaren Montage an einer Hinterradachse und zum Eingriff in eine Fahrradkette. Die Kettenrad-Unterbaugruppe umfasst einen erfindungsgemäßen Kettenradträger, wie er im Vorhergehenden beschrieben wurde. Die Kettenrad-Unterbaugruppe umfasst weiterhin eine Anzahl von mindestens drei an dem Träger montierbaren bzw. montierten großen Kettenrädern mit unterschiedlichen Zähnezahlen.

Große Kettenräder weisen eine erhöhte Anzahl von Zähnen, insbesondere 32 Zähne, oder mehr auf. Die Erfindung zielt gerade auf die Anbringung von solchen großen Kettenrädern ab, weil dort die eingangs beschriebenen Probleme bzgl. Stabilität und Gewicht am größten sind. Insbesondere die drei größten Kettenräder der Mehrfach-Kettenradanordnung sind am Träger montiert.

Gemäß einer Weiterbildung der Erfindung weist der Träger eine Mehrzahl von ersten, zweiten und dritten Trägerstufen auf, an denen jeweils ein erstes, zweites und drittes Kettenrad auf dem Träger anbringbar ist.

Der Träger weist erste Trägerstufen zur Anbringung des ersten Kettenblatts auf, insbesondere zur Anbringung des größten Kettenblatts auf der axialen Innenseite am radial äußeren Ende des Trägers, genauer gesagt am Außenring des Trägers. Der Träger weist weiter zweite Trägerstufen zur Anbringung des zweiten Kettenblatts auf, insbesondere zur Anbringung des zweitgrößten Kettenblatts auf der axialen Außenseite am radial äußeren Ende des Trägers, genauer gesagt am Außenring des Trägers. Der Träger weist dritte Trägerstufen zur Anbringung des dritten Kettenblatts auf, insbesondere zur Anbringung des drittgrößten Kettenblatts auf der axialen Außenseite im Bereich des Trägerarme, genauer gesagt am radial äußeren Ende der Trägerarme, aber noch radial innerhalb der Trägervorsprünge.

Insbesondere weist der Träger erste Trägerstufen zur Anbringung des größten Kettenrads in Form von Einprägungen auf der axialen Innenseite der Trägervorsprünge auf. Der Träger weist weiter zweite Trägerstufen zur Anbringung des zweitgrößten Kettenrads auf einer axialen Außenseite der Trägervorsprünge auf. Mit der Innenseite ist die in montiertem Zustand der Fahrradspeichen bzw. dem Antreiberanschlag zugewandte Seite des Trägers und der Kettenblätter gemeint. Entsprechend ist die Außenseite die davon abgewandte Seite des Trägers und der Kettenblätter.

Gemäß einer Weiterbildung der Erfindung umfasst die Kettenrad-Unterbaugruppe ein viertes Kettenrad. Das vierte Kettenrad ist insbesondere das viertgrößte Kettenrad. Der Träger weist vierte Trägerstufen zur Anbringung des viertgrößten Kettenblatts auf der Trägeraußenseite im Bereich der radial äußeren Enden der Trägerarme auf.

Gemäß einer Weiterbildung der Erfindung liegen die ersten, zweiten, dritten und vierten Trägerstufen in axialer Richtung auf jeweils unterschiedlichen Niveaus.

Insbesondere liegt die Mehrzahl von insbesondere zehn ersten Trägerstufen in axialer Richtung auf demselben ersten Niveau und erstreckt sich in montiertem Zustand senkrecht zur Hinterradachse A. Die Mehrzahl von insbesondere zehn zweiten Trägerstufen liegt in axialer Richtung auf demselben zweiten Niveau und erstreckt sich in montiertem Zustand senkrecht zur Hinterradachse A. Die Mehrzahl von insbesondere fünf dritten Trägerstufen liegt in axialer Richtung auf demselben dritten Niveau und erstreckt sich in montiertem Zustand senkrecht zur Hinterradachse A. Die Mehrzahl von insbesondere fünf vierten Trägerstufen liegt in axialer Richtung auf demselben vierten Niveau und erstreckt sich in montiertem Zustand senkrecht zur Hinterradachse A.

Die dritten und vierten Trägerstufen sind in Umfangsrichtung auf dem Trägerarm versetzt zueinander angeordnet. Das heißt sie liegen in radialer Richtung nicht auf einer Linie. Dies spart Platz und erleichtert die Herstellung der Trägerstufen im Umformverfahren. Die Trägerstufen werden nacheinander in mehreren Schritten des mehrstufigen Stanz-Biegeverfahrens gefertigt. Die Verformungen der Trägerstufen tragen zur Stabilität des Trägers bei. Zum anderen führt die Anordnung der Kettenräder auf den Trägerstufen auf jeweils unterschiedlichen Niveaus zu einer axialen Beabstandung der Kettenräder.

Gemäß einer Weiterbildung der Erfindung weisen die Trägerstufen jeweils ein Nietaufnahmeloch auf.

Insbesondere weisen die zehn Trägervorsprünge und damit die ersten und zweiten Trägerstufen jeweils nur ein gemeinsames Nietaufnahmeloch zur Befestigung des ersten und des zweiten Kettenblatts auf. Die fünf dritten und vierten Trägerstufen hingegen weisen jeweils fünf Nietaufnahmelöcher zur Befestigung des dritten Kettenblatts und fünf weitere Nietaufnahmelöcher zur Befestigung des vierten Kettenblatts auf.

Insbesondere sind Nietaufnahmelöcher entlang eines Trägerarms in Umfangsrichtung versetzt zueinander angeordnet. Sie liegen also in radialer Richtung betrachtet nicht auf einer Linie. Der Versatz der Nietaufnahmelöcher spart Platz und vereinfacht die Herstellung.

Gemäß einer Weiterbildung der Erfindung weist das erste bzw. größte Kettenrad entlang seines radial äußeren Umfangs einen Außenring mit einer Mehrzahl von Zähnen auf. Weiter weist es an seinem radial inneren Ende einen Innenring auf.

Gemäß einer Weiterbildung der Erfindung erstreckt sich eine Mehrzahl von Kettenradstegen von dem Außenring zum Innenring. Ähnlich wie beim Träger dienen diese Kettenradstege zur Abstützung und Stabilisierung des Kettenrads. Die Stege dienen der Kraftaufnahme bzw. Weiterleitung. In Drehrichtung D der Mehrfach-Kettenradanordnung betrachtet, erstrecken sich die Kettenradstege in einem ähnlichen Winkel wie die Trägerstege schräg nach vorne. Durch diese Ausrichtung wirken die Stege wie Druckstäbe und können Kräfte und Spannungen, die von der Kette auf das Kettenrad übertragen werden, aufnehmen und nach radial innen in Richtung des Trägers weiterleiten.

Ein massiv ausgebildetes Kettenrad ohne Durchbrüche wäre zwar stabiler, aber auch viel schwerer. Die erfindungsgemäßen Kettenradstege stellen einen guten Kompromiss zwischen Festigkeit und Gewicht dar. Das gleiche Prinzip ist auf das zweitgrößte und/oder die übrigen Kettenräder anzuwenden. Allerdings ist diese Ausführung gerade bei den größten Kettenrädern mit 36 und mehr Zähnen von Bedeutung.

Gemäß einer Weiterbildung der Erfindung ist entlang des Innenrings des ersten Kettenrads eine Mehrzahl von Kettenradvorsprüngen mit jeweils einem Nietaufnahmeloch angeordnet. Die Kettenradvorsprünge erstrecken sich nach radial innen. Die insbesondere zehn Kettenradvorsprünge sind gleichmäßig entlang des inneren Umfangs verteilt und auf die Trägervorsprünge des Kettenradträgers abgestimmt. In montiertem Zustand des größten Kettenrads überlappen die Vorsprünge und die Nietaufnahmelöcher des ersten Kettenrads und des Trägers.

Das größte Kettenrad ist auf der Innenseite des Trägers montiert, so dass die Vorsprünge des Trägers in axialer Richtung weiter außen als die entsprechenden Vorsprünge des Kettenrads angeordnet sind. Diese Überlappung trägt zur Erhöhung der Stabilität bei. Bei Anordnungen mit einer erhöhten Anzahl von Kettenrädern ist der Schräglauf der Kette am größten Kettenrad besonders groß. Das Kettenrad wird von der schräglaufenden Kette nach außen gezogen. Dem wirken die überlappenden Vorsprünge des Trägers entgegen. Der Überlappungsbereich der Trägervorsprünge ist wesentlich größer als der Überlappungsbereich der bloßen Nietköpfe. Zur Gewichtseinsparung weisen sowohl der Träger, als auch die großen Kettenräder eine Vielzahl von Durchbrüchen auf.

Ein weiterer Aspekt der Erfindung betrifft eine Mehrfach-Kettenradanordnung zur drehbaren Montage an einer Hinterradachse und zum Eingriff in eine Fahrradkette. Die erfindungsgemäße Mehrfach-Kettenradanordnung umfasst eine Kettenrad-Unterbaugruppe, wie sie im Vorhergehenden beschreiben wurde, und eine Mehrzahl von weiteren Kettenrädern. Die weiteren Kettenräder sind kleiner als die großen Kettenräder. Insbesondere weisen sie 36 oder weniger Zähne auf. Insbesondere sieben oder acht weitere Kettenräder können als Einzelkettenräder ausgebildet sein, die in radialer Richtung bis zum Antreiber reichen und in diesen drehmomentübertragend eingreifen.

Gemäß einer Weiterbildung der Erfindung umfasst die Mehrfach-Kettenradanordnung insgesamt zumindest elf Kettenräder. Insbesondere Ausführungen mit insgesamt zwölf Kettenrädern bieten eine gute Auswahl an Übersetzungsverhältnissen. Auch insgesamt dreizehn Kettenräder sind möglich.

Gemäß einer Weiterbildung der Erfindung weist das größte Kettenrad der Mehrfach-Kettenradanordnung zumindest 48 Zähne auf. Größte Kettenräder mit 50 oder 51 Zähnen sind ebenfalls denkbar. Das kleinste Kettenrad weist höchstens elf Zähne auf. Insbesondere weist das kleinste Kettenrad zehn oder neun Zähne auf. Ein besonders günstiger Übersetzungsbereich wird bei Ausführungen mit 50 oder 51 Zähnen am größten Ritzel und zehn oder elf Zähen am kleinsten Ritzel erzielt.

Die zwei größten Ritzel der erfindungsgemäßen Mehrfach-Ritzelanordnung verfügen über 50 beziehungsweise 42 Zähne an der äußeren Peripherie zum Eingriff der Rollenkette. Sie haben damit eine Dimension, die von vorderen Kettenringen an sich schon bekannt ist und auch beherrscht wird. Allerdings sind die Anforderungen bei einem vorderen Kettenring, der an einer Tretkurbel oder an einem Kurbelstern montiert ist, nicht gleichzusetzen mit den Anforderungen an ein hinteres Ritzel, das auf einem Antreiber einer Kassettennabe eines Hinterrades befestigt wird. Die bekannten Kettenblätter an vorderen Tretkurbeln sind symmetrisch zur sogenannten "Kettenlinie" montiert. Die üblicherweise Höchstzahl von vorderen Kettenblättern ist drei.

Gemäß einer alternativen Ausführung der Erfindung reichen die übrigen Einzelkettenräder in radialer Richtung nicht wie in den Figuren gezeigt bis an den Antreiber heran. Ein Drehmoment wird nicht direkt, sondern indirekt auf einen Antreiber übertragen. Eine indirekte Drehmomentübertragung ist mittels eines weiteren Ritzelträgers (Spider) möglich. Eine andere Möglichkeit ist die Ableitung des Drehmoments über die benachbarten Ritzel bis hin zu einem mit dem Antreiber drehmomentübertragend verbundenen Ritzel oder Unterbraugruppe. Auf diese Weise können die Kettenradkörper der Kettenräder, die kein Drehmoment übertragen, ringförmig ausgebildet sein und Gewicht gespart werden. Benachbarte Einzelkettenräder könnten mittels sich axial erstreckender Verbindungsmittel verbunden sein. Bei diesen Verbindungsmitteln handelt es sich insbesondere um Stifte.

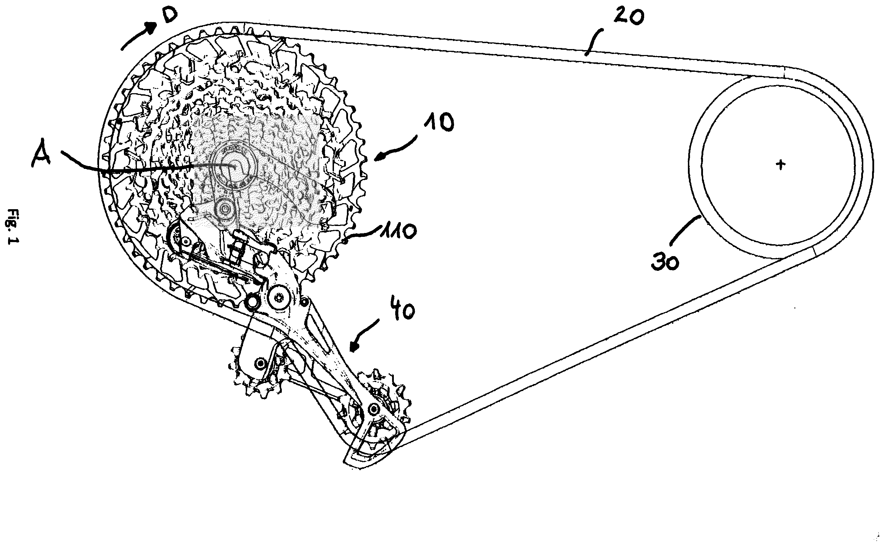

Die vorliegende Erfindung betrifft weiterhin einen Fahrradantrieb - wie in Figur 1 gezeigt - mit einer erfindungsgemäßen Mehrfach-Ritzelanordnung, einem hinteren Schaltwerk und einer vorderen Kettenringanordnung mit mindestens einem, insbesondere genau einem vorderen, feststehenden Kettenring.

### Kurzbeschreibung der Zeichnungen:

- Fig. 1: Schematische Darstellung eines erfindungsgemäßen Fahrradantriebs
- Fig. 2: Schnitt durch eine auf einen Antreiber montierte erfindungsgemäße Mehrfach-Kettenradanordnung
- Fig. 3a: Außenansicht einer erfindungsgemäßen Mehrfach-Kettenradanordnung
- Fig. 3b: Innenansicht der Mehrfach-Kettenradanordnung aus Fig. 3a
- Fig. 3c: Seitenansicht der Mehrfach-Kettenradanordnung aus Fig. 3a
- Fig. 3d: Perspektivische Innenansicht der Mehrfach-Kettenradanordnung
- Fig. 4a: Seitenansicht der Mehrfach-Ritzelanordnung aus Fig. 3 mit teils auseinandergezogenen Bauteilen
- Fig. 4b: Perspektivische Ansicht der Mehrfach-Ritzelanordnung aus Fig. 4a
- Fig. 5a: Perspektivische Außenansicht der Kettenrad-Unterbaugruppe der Mehrfach-Ritzelanordnung aus Fig. 3
- Fig. 5b: Perspektivische Innenansicht der Kettenrad-Unterbaugruppe aus Fig. 5a
- Fig. 6a: Perspektivische Außenansicht des auf den Kettenradträger montierten größten Kettenrads
- Fig. 6b: Perspektivische Innenansicht von Fig. 6a
- Fig. 7: Perspektivische Außenansicht des auf den Kettenradträger montierten größten und zweitgrößten Kettenrads
- Fig. 8: Perspektivische Außenansicht des auf den Kettenradträger montierten größten, zweit- und drittgrößten Kettenrads
- Fig. 9a: Außenansicht des erfindungsgemäßen Kettenradträgers
- Fig. 9b: Innenansicht des erfindungsgemäßen Kettenradträgers
- Fig. 9c: Perspektivische Außenansicht des erfindungsgemäßen Kettenradträgers
- Fig. 9d: Perspektivische Innenansicht des erfindungsgemäßen Kettenradträgers
- Fig. 9e: Schnittansicht I-I gemäß Fig. 9a und vergrößerte Detailansichten A und D des erfindungsgemäßen Kettenradträgers
- Fig. 9f: Schnittansicht II-II gemäß Fig. 9a und vergrößerte Detailansichten B und C des erfindungsgemäßen Kettenradträgers
- Fig. 10a: Außenansicht des größten Kettenrads
- Fig. 10b: Innenansicht des größten Kettenrads
- Fig. 11a: Außenansicht des zweitgrößten Kettenrads
- Fig. 11b: Innenansicht des zweitgrößten Kettenrads
- Fig. 12a: Außenansicht des drittgrößten Kettenrads
- Fig. 12b: Innenansicht des drittgrößten Kettenrads
- Fig. 13a: Außenansicht des viertgrößten Kettenrads
- Fig. 13b: Innenansicht des viertgrößten Kettenrads

### Detaillierte Beschreibung der bevorzugten Ausführungsformen

Figur 1 zeigt eine schematische Darstellung eines erfindungsgemäßen Fahrradantriebs. Die vordere Kettenblatt-Anordnung umfasst ein einzelnes, feststehendes Kettenblatt 30. Die Mehrfach-Ritzelanordnung 10 umfasst zwölf Ritzel mit einem größten Ritzel 110 und elf weiteren Ritzeln mit unterschiedlichen Durchmessern bzw. unterschiedlicher Zähnezahl. In dem gezeigten Zustand steht die Fahrradkette 20 mit den Zähnen des Kettenblatts 30 und mit den Zähnen des größten Ritzels 120 der Mehrfach-Ritzelanordnung 10 in Eingriff. Mittels der Fahrradkette 20 wird in Drehrichtung D eine Kraft vom vorderen Kettenblatt 30 auf die hintere Mehrfach-Ritzelanordnung 10 und von dort über einen Antreiber auf die Hinterradnabe übertragen. Die Mehrfach-Ritzelanordnung 10 dreht sich um die Achse A, welche der Hinterradachse entspricht. Das Schaltwerk 40 bewegt die Fahrradkette 20 beim Schalten von einem Ritzel auf ein benachbartes Ritzel. Das Schaltwerk kann dabei entweder mechanisch oder elektrisch bedient werden. Im gezeigten Ausführungsbeispiel mit nur einem Kettenblatt 30 entfällt der vordere Umwerfer.

Bei Ausführungen mit mehreren Kettenblättern kann auch der vordere Umwerfer elektrisch, insbesondere kabellos, betrieben werden. Die im Folgenden verwendeten Richtungsangaben vorne/hinten beziehen sich auf ein Fahrrad in Fahrrichtung. Die Zähne sind an einem Kettenrad radial außen angeordnet. Das Profil zur Drehmomentübertragung ist radial innen an einem Kettenrad bzw. am Kettenradträger angeordnet. Die kleinen Kettenräder sind axial weiter außen als die großen Kettenräder angeordnet. Das größte Kettenrad 110 ist axial weiter innen als die restlichen Kettenräder angeordnet. Die Innenseite der Kettenräder und des Kettenradträgers weist in montiertem Zustand in Richtung der Fahrradspeichen. Die Außenseite weist von den Fahrradspeichen weg.

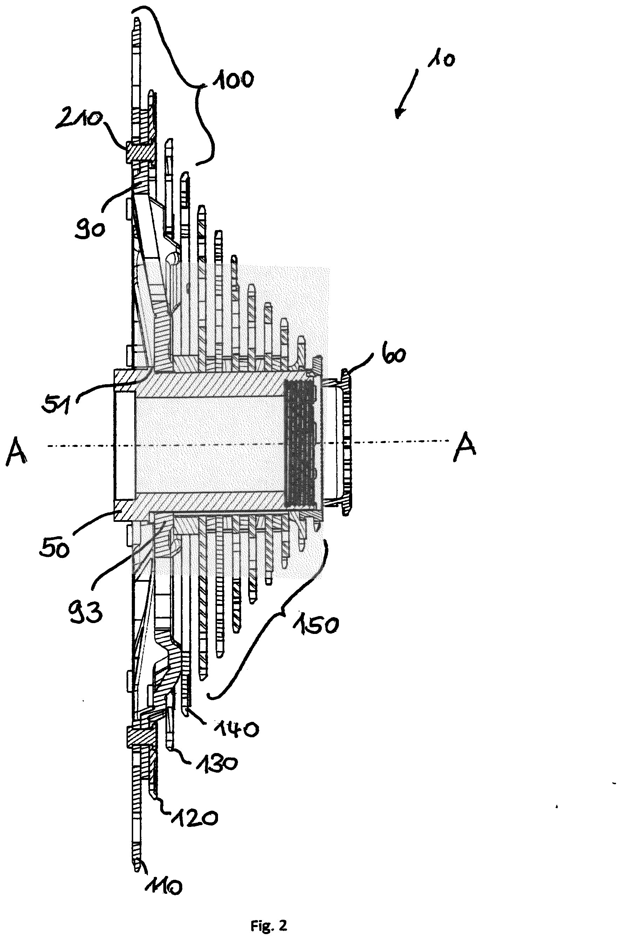

Figur 2 zeigt einen Schnitt durch die auf einen Antreiber 50 montierte erfindungsgemäße Mehrfach-Kettenradanordnung 10. Der Antreiber 50 ist üblicherweise an der Hinterradnabe montierbar und drehbar gegenüber der Nabenachse und gegenüber der Nabenhülse gelagert, wobei ein Freilauf zwischen Antreiber 50 und Nabenhülse vorgesehen ist. Antreiber 50 weisen üblicherweise ein Profil zur Drehmomentübertragung zwischen der Kettenradanordnung 10 und dem Antreiber auf. Das Profil sowie der restliche Antreiber weist Standardabmessungen auf, so dass die Kettenradanordnung 10 austauschbar ist. Die Mehrfach-Kettenradanordnung 10 wird zur Montage in axialer Richtung auf den Antreiber 50 geschoben, bis sie gegen den Antreiberanschlag 51 stößt. Im gezeigten Ausführungsbeispiel liegt der radial innere Bereich des Kettenradträgers 90 am Antreiberanschlag 51 an. Ein Abschlussring 60 (lock ring) mit Außengewinde wird in ein Innengewinde des Antreibers 51 eingeschraubt und dient der axialen Befestigung der Mehrfach-Kettenradanordnung 10 auf dem Antreiber 50. Durch die Standardabmessungen des Antreibers ist der axiale Bauraum zwischen dem Anschlag 51 und einem hier nicht gezeigten Fahrradrahmen beschränkt und bietet nicht genügend Raum, um zwölf Kettenräder direkt mit dem Antreiber 50 in drehmomentübertragenden Eingriff zu bringen. Dieses Problem wird durch den gekröpft ausgebildeten Kettenradträger 90 gelöst. Der Träger 90 weist an seinem radial inneren Ende ein Profil 93 zum drehmomentübertragenden Eingriff in das entsprechende Profil am Antreiber auf. Am radial äußeren Ende des Kettenradträgers 90 ist das erste Kettenblatt 110 und das zweite Kettenblatt 120 mit Nieten 210 befestigt. Aufgrund der Kröpfung des Trägers 90 liegt in montiertem Zustand das radial innere Ende des Trägers 90 axial weiter außen als das radial äußere Ende des Trägers 90. Das radial innere Ende des Trägers 90 liegt von außen am Antreiberanschlag 51 an, ist also axial außen vom Anschlag 51 angeordnet. Im Vergleich dazu liegt das radial äußere Ende des Trägers 90 mit den ersten und zweiten Kettenrädern 110, 120 weiter innen als der Antreiberanschlag 51, ist also axial innen vom Anschlag 51 angeordnet. Man spricht auch von überhängenden Kettenrädern 110, 120 in Bezug auf den Antreiberanschlag 51. Diese überhängende Anordnung des ersten und zweiten Kettenrads 110, 120 erlaubt eine Anordnung von zwölf Ritzeln auf einem Standardantreiber 51, trotz des begrenzten Bauraums. Die übrigen Kettenräder 130, 140, 150 sind in montiertem Zustand axial weiter außen als der Anschlag 51 positioniert.

In diesem Ausführungsbeispiel hat das kleinste Ritzel elf Zähne. Dies hat den Vorteil, dass sein Innenumfang noch groß genug ist, um auf den Außenumfang eines Standardantreibers 51 zu passen. Ritzel mit zehn oder weniger Zähnen müssen dagegen auf einem speziellen Antreiber oder freitragend neben (axial außen) vom Antreiber angebracht werden.

Die sich vom Speichenflansch an der Nabenhülse zur Hinterradfelge erstreckenden Speichen sind gegenüber der Mittelebene des Hinterrades geneigt (hier nicht gezeigt). Betrachtet man die verschiedenen Abschnitte dieser Speichen, dann nähern sich die Speichenabschnitte immer weiter an die Mittelebene des Hinterrades an, je näher sie zur Hinterradfelge positioniert sind. Das eröffnet die Möglichkeit, gerade sehr große Ritzel axial innerhalb des Anschlags 51 am Antreiber 50 vorzusehen, ohne dass es zu Kollisionen zwischen Ritzel 110 und Speichen kommt. Auch kann die Kettenführung eines hinteren Schaltwerks 40 zum Zweck des Gangumschaltens problemlos an der axialen Position des größten Ritzels 110 verschoben werden, ohne dass die Kettenführung die Speichen berührt.

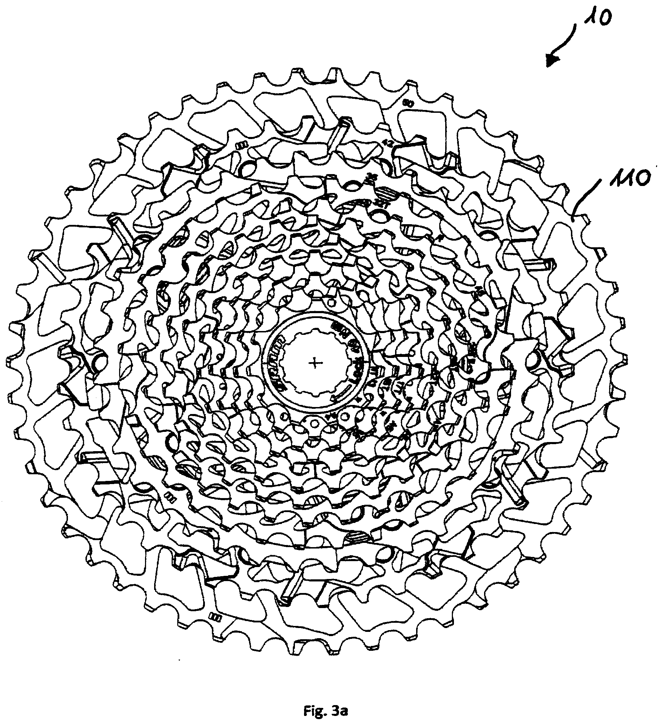

Figur 3a zeigt eine Außenansicht einer erfindungsgemäßen Mehrfach-Kettenradanordnung 10 mit zwölf Kettenrädern. Das größte Kettenrad 110 weist eine Anzahl von 50 Zähnen auf. Die folgenden Kettenräder weisen 42, 36, 32, 28, 25, 22, 19, 17, 15, 13 und elf Zähne auf.

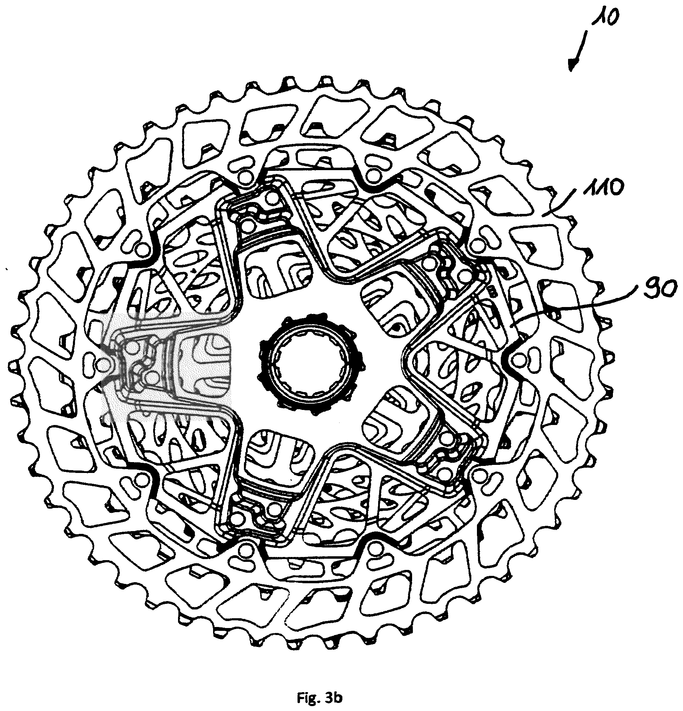

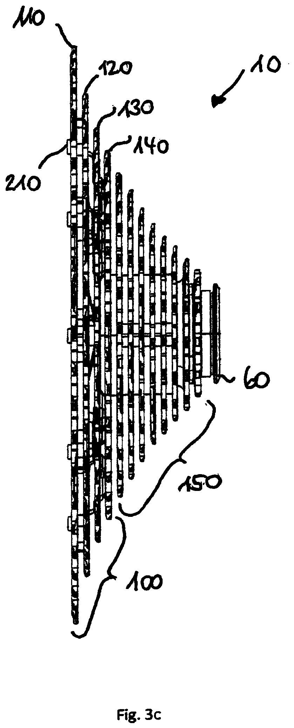

Figur 3b zeigt die Innenansicht der Mehrfach-Kettenradanordnung 10 aus Figur 3a. Hier ist der Kettenradträger 90 mit seinen fünf Armen gut zu erkennen. Das größte Kettenrad 110 ist auf der Innenseite des Trägers 90 mit einer Vielzahl von Nieten befestigt. Figur 3c zeigt eine Seitenansicht der Mehrfach-Kettenradanordnung 10 aus Figur 3a. Die vier größten Kettenräder 110, 120, 130, 140 sind mit einer Vielzahl von Nieten an dem Träger 90 befestigt und bilden zusammen mit dem Träger 90 die Kettenrad-Unterbaugruppe 100. Dabei ist das größte Kettenrad 110 auf der Innenseite des Trägers 90 und das zweite Kettenrad 120 auf der Außenseite des Trägers 90 mit einer Vielzahl von Nieten 210 befestigt. Das zweite und dritte Kettenrad 130, 140 sind ebenfalls auf der Außenseite des Trägers 90 angeordnet und mit Nieten befestigt. Die vier großen Kettenräder 110, 120, 130, 140 sind als Kettenringe ausgebildet und reichen nicht bis zum Antreiber 50, sondern nur bis an die entsprechenden Trägerstufen des Trägers 90 heran. Der Träger 90 steht mit dem Antreiber 51 in drehmomentübertragendem Eingriff. Das Drehmoment der großen Ritzel wird also über den Träger 90 auf den Antreiber 50 übertragen. Diese Ausführung der Kettenräder spart Material und damit auch Gewicht. Gerade bei den größten Kettenrädern ist dies von Bedeutung. Die restlichen acht, kleineren und damit auch leichteren Kettenräder 150, reichen jeweils bis an den Antreiber 50 heran und stehen mit diesem direkt in drehmomentübertragendem Eingriff.

Ein weiterer Aspekt ist das Verhalten bei der Wärmebehandlung der Kettenräder. Ritzel mit großem Außendurchmesser und kleinem Durchmesser der Innenperipherie mit einem Profil zur Drehmomentübertragung auf den Antreiber neigen besonders zum Verziehen gegenüber der Mittelebene des Ritzels. Dementsprechend kann die exakte axiale Position der Zähne nicht eingehalten werden. Die relativ schmal ausgebildeten Kettenräder 110, 120, 130 und 140 am Träger 90 in Form eines Ringes sind diesbezüglich weniger anfällig.

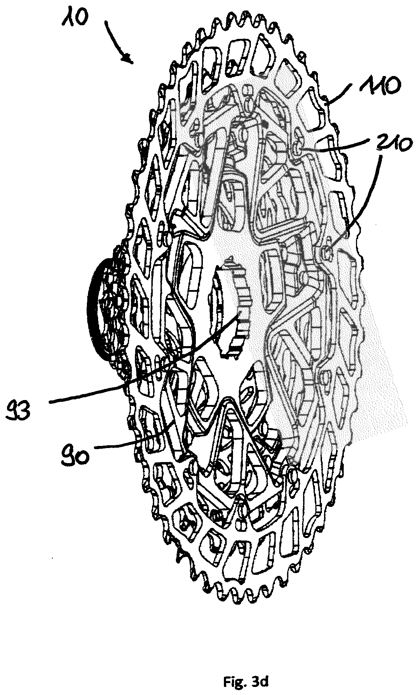

Die Kettenräder werden von dem Abschlussring 60 auf dem Antreiber 50 gehalten. In der perspektivischen Innenansicht der Mehrfach-Kettenradanordnung 10 in Figur 3d ist der Träger 90 mit seinem Profil zur Drehmomentübertragung 93 gut zu erkennen.

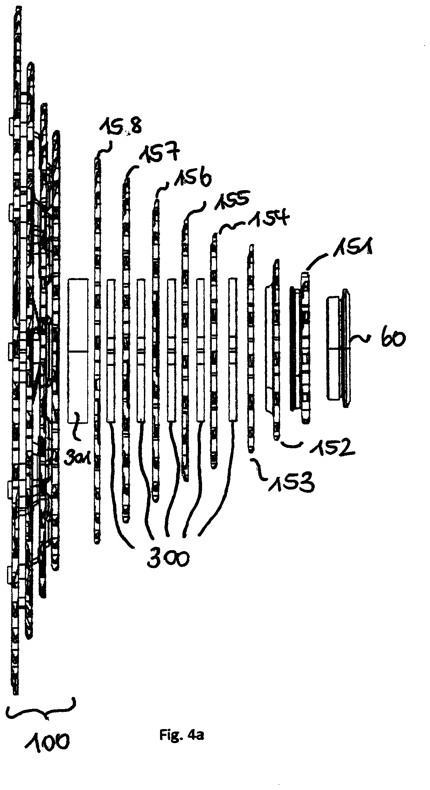

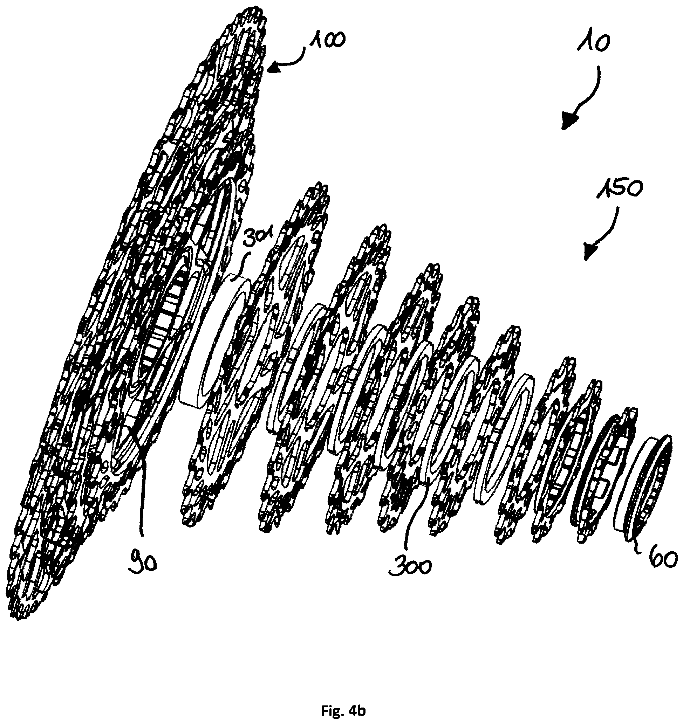

Figur 4a und 4b zeigen eine Seitenansicht und eine perspektivische Ansicht der Mehrfach-Ritzelanordnung 10 aus Figur 3 mit der Kettenrad-Unterbaugruppe 100 und den restlichen acht Einzelkettenrädem 151 bis 158 auseinandergezogen. In der auseinandergezogenen Darstellung werden die Abstandshalter 300 zwischen den benachbarten Kettenrädern 151 bis 156 sichtbar. Der Abstandshalter 301 zwischen dem viertgrößten Ritzel und dem nächstkleineren Ritzel 151 ist etwas breiter ausgebildet, da der Abstand zwischen dem Träger 90 und dem Ritzel 151 etwas größer ist, als der im wesentlichen gleichmäßige Abstand zwischen jeweils benachbarten Kettenrädern. Die kleinsten Ritzel 157 und 158 weisen auf ihren Innenseiten jeweils einen umlaufenden Flanschabschnitt auf, der als Abstandshalter dient. In der perspektiven Ansicht werden an den radial inneren Enden der kleinen Ritzel 150 die Profile zum Eingriff in den Antreiber sichtbar.

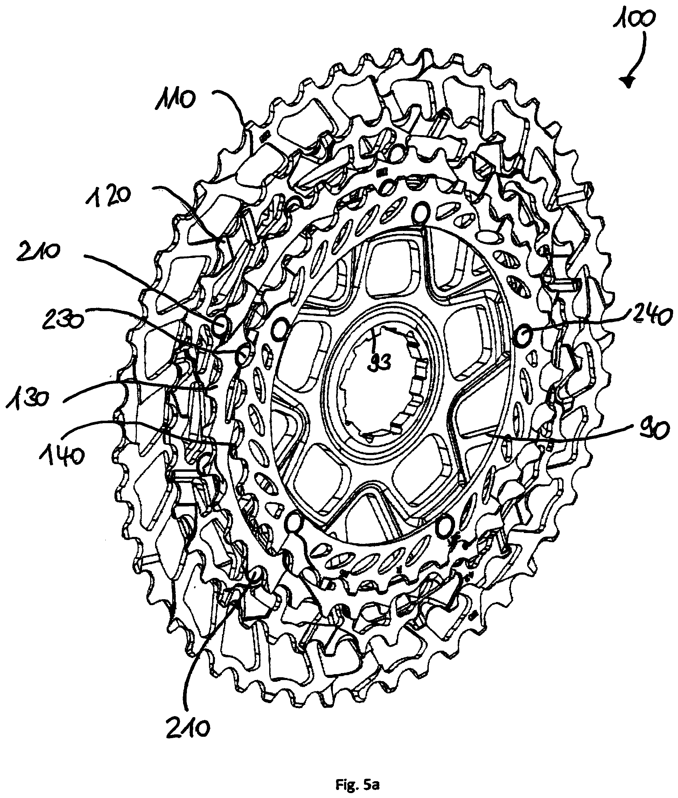

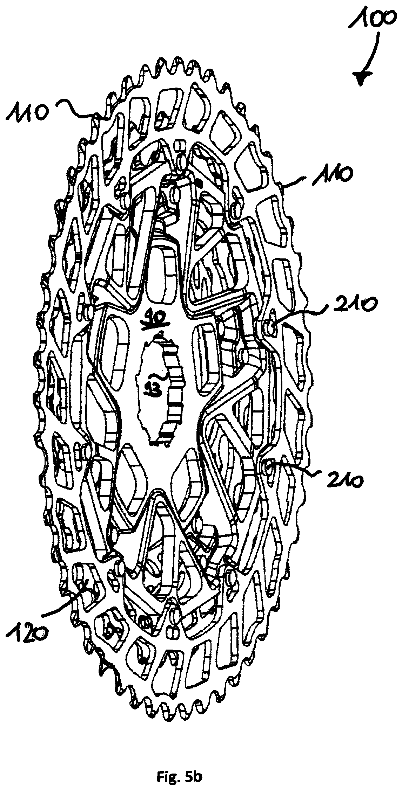

Figur 5a zeigt eine perspektivische Außenansicht und Figur 5b eine perspektivische Innenansicht der Kettenrad-Unterbaugruppe 100 der Mehrfach-Ritzelanordnung 10 aus Figur 3. Die vier größten Kettenräder 110, 120, 130 und 140 sind voneinander beabstandet auf dem Träger 90 mit dem Profil 93 befestigt. Dazu ist das viertgrößte Kettenrad 140 mit fünf Nieten 240 axial außen auf einem vierten Trägerniveau befestigt. Davon ist das drittgrößte Kettenrad 130 axial weiter innen mit weiteren fünf Nieten 230 auf einem dritten Trägerniveau befestigt. Das zweitgrößte Ritzel 120 ist auf der Außenseite des Trägers 90 und das größte Ritzel 110 auf der Innenseite des Trägers 90 angeordnet. Die beiden größten Ritzel 110, 120 sind gemeinsam mit zehn Nieten 210 auf dem Träger 90 befestigt.

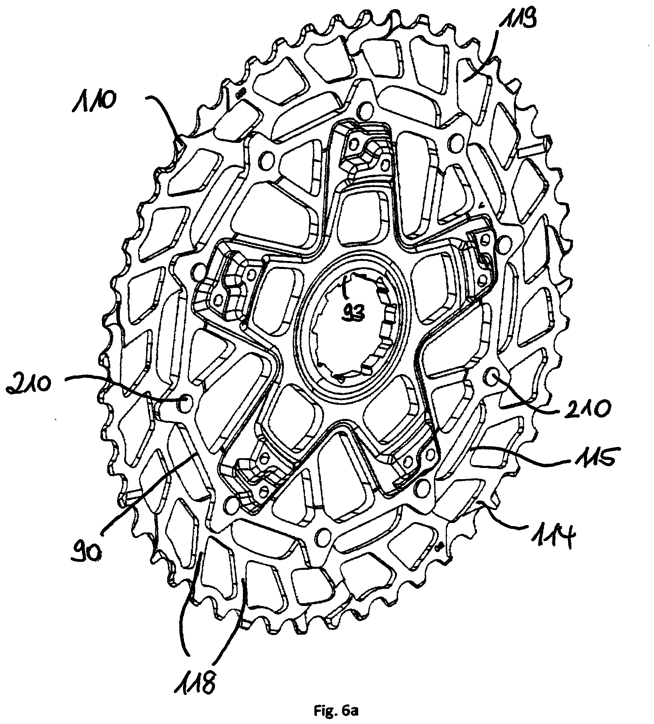

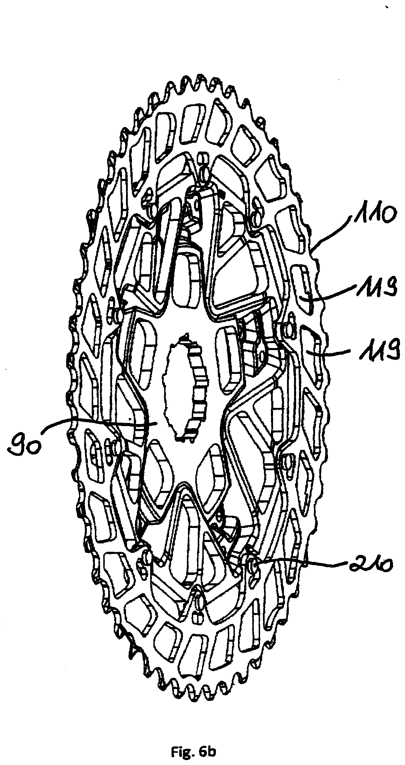

Die Figuren 6 bis 8 zeigen die Reihenfolge in der die vier größten Kettenräder montiert werden.

Figur 6a zeigt eine perspektivische Außenansicht und Figur 6b eine perspektivische Innenansicht des auf den Kettenradträger 90 montierten größten Kettenrads 110. Das Kettenrad 110 liegt an der Innenseite des Trägers 90 an. Das Kettenrad 110 und der Träger 90 überlappen sich im Bereich ihrer jeweils zehn Vorsprünge. In diesem Überlappungsbereich sind sie auch mittels zehn Nieten 210 miteinander vernietet. Das größte Ritzel 110 ist als ringförmig mit einem Außenring 114 und einem Innenring 115 ausgebildet. Zwischen dem radialen Außenring 114 und Innenring 115 erstrecken sich eine Vielzahl von Kettenradstegen 118. Zur Gewichtseinsparung ist eine Vielzahl von Durchbrüchen 119 im ringförmigen Kettenrad 110 vorgesehen.

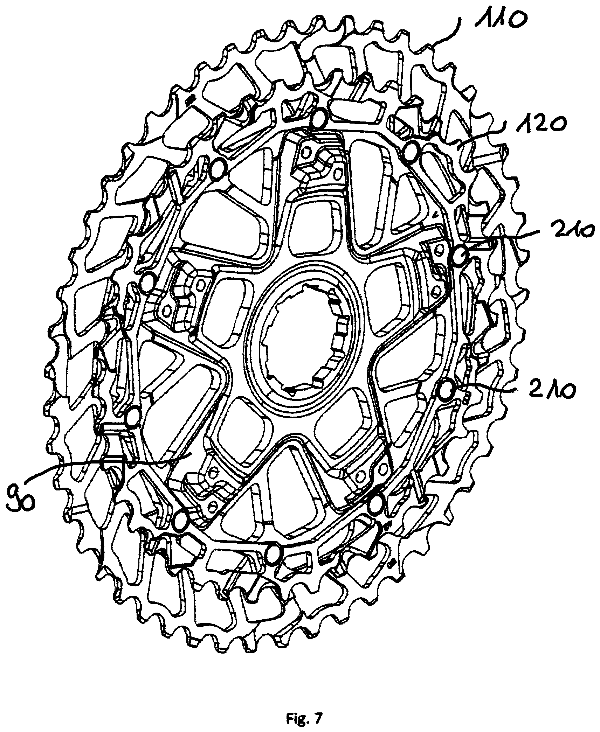

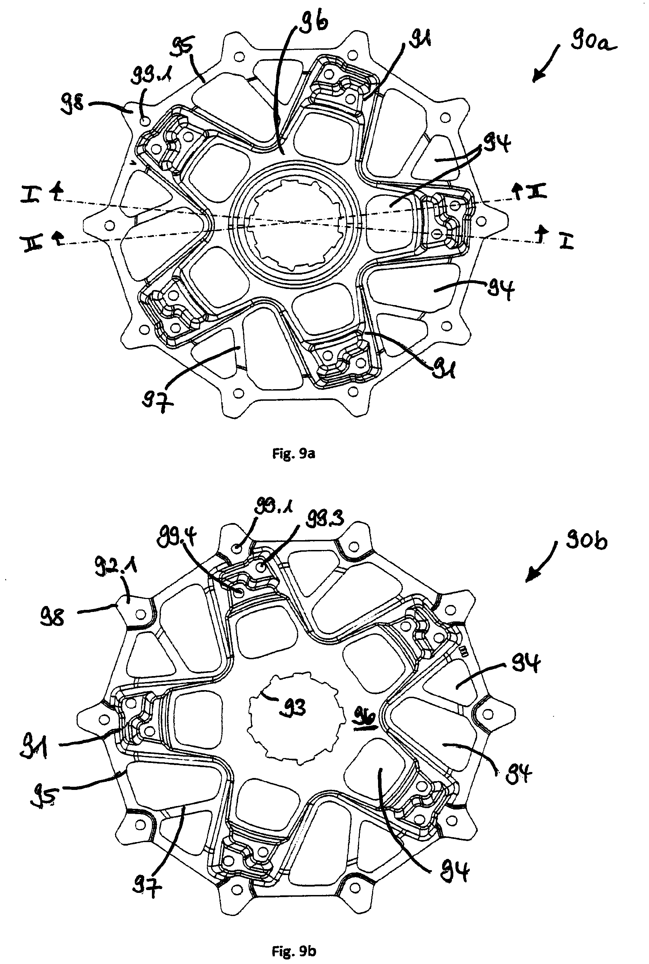

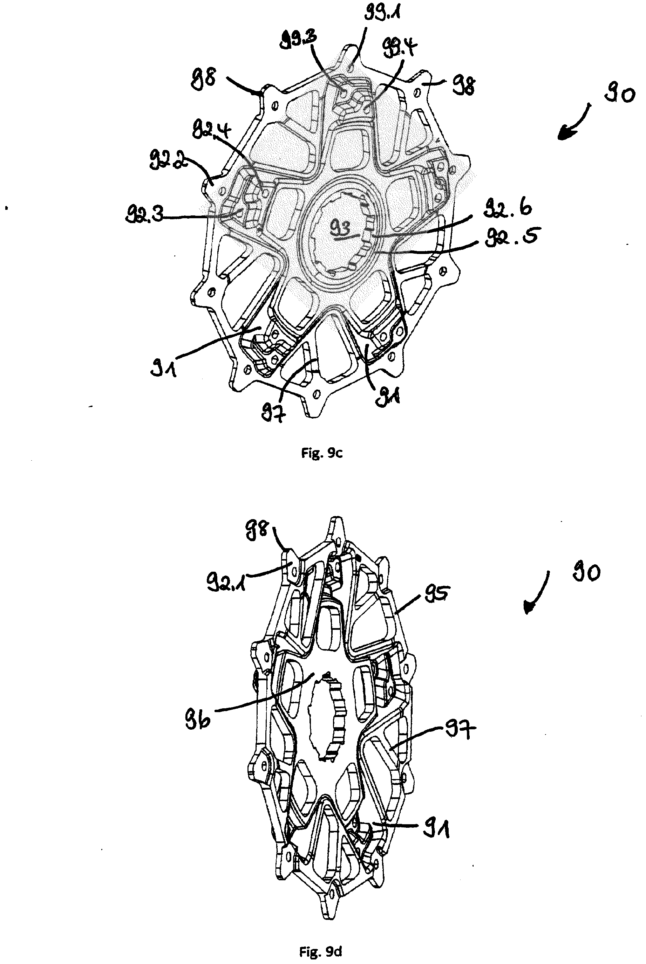

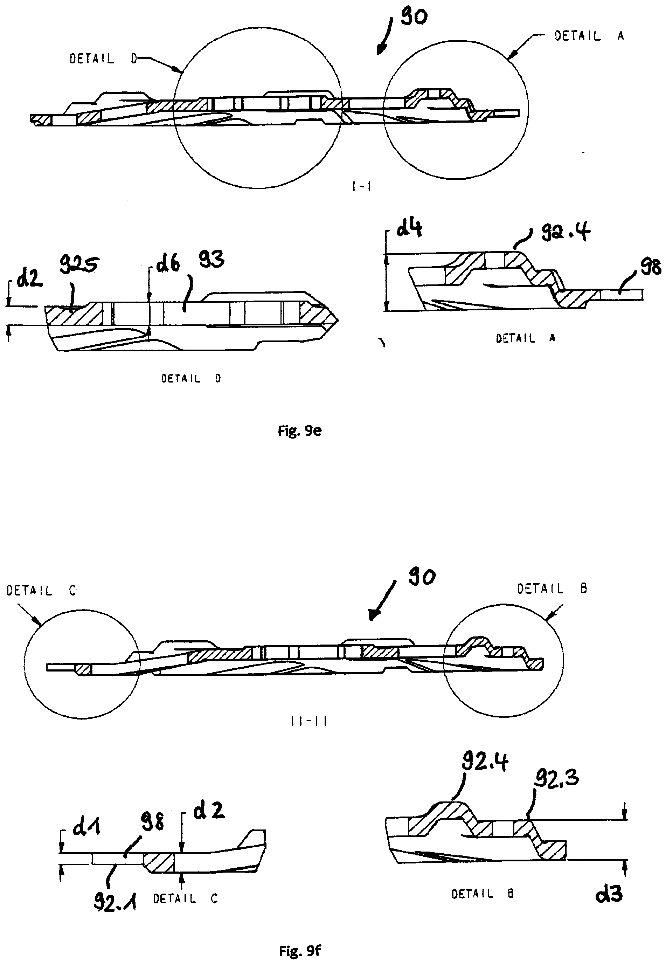

Figur 7 zeigt eine perspektivische Außenansicht des auf den Kettenradträger 90 montierten größten und zweitgrößten Kettenrads 110, 120. Die beiden größten Kettenräder 110, 120 teilen sich die insgesamt zehn Nieten 210, wobei das größte Kettenrad 110 auf der Innenseite und das zweitgrößte Kettenrad 120 auf der Außenseite des Trägers 90 angeordnet ist. Beabstandet werden die beiden größten Kettenräder 110, 120 durch die Vorsprünge des Trägers 90 (vgl. Figur 9 ff.). Diese Anordnung der beiden Kettenräder 110, 120 reduziert die Anzahl der benötigten Nieten und verkürzt das Montageverfahren. Die zehn Nieten 210 werden vorzugsweise gleichzeitig vernietet.

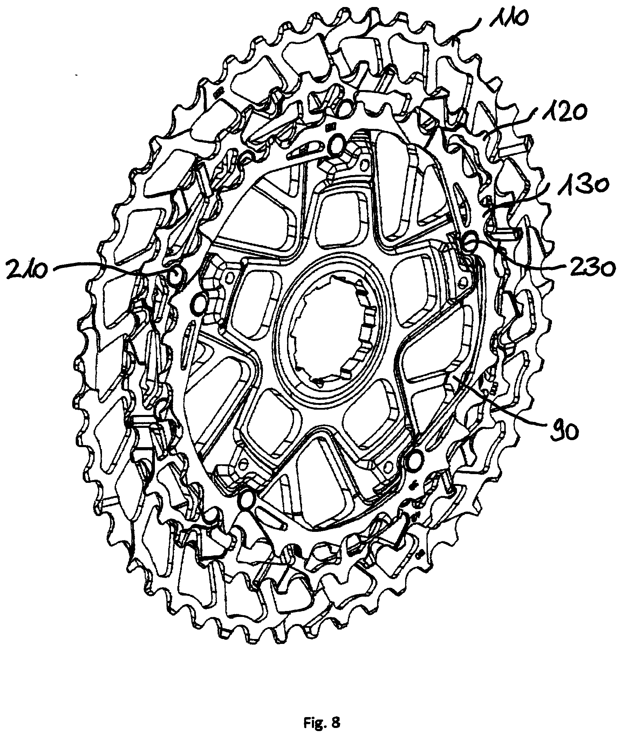

Figur 8 zeigt eine perspektivische Außenansicht der drei größten auf den Kettenradträger 90 montierten Kettenräder 110, 120, 130. Während die beiden größten Kettenräder 110, 120 jeweils gemeinsam an den zehn radialen Vorsprüngen es Trägers 90 montiert sind, ist das Kettenrad 130 nur noch an den fünf Armen des Trägers 90 mit fünf Nieten 230 befestigt. Die fünf Trägerarme 91 haben mehrere Stufen auf verschiedenen Niveaus, wobei das drittgrößte Ritzel 130 auf dem dritten Niveau bzw. der dritten Stufe befestigt ist. Auch diese fünf Nieten 230 werden vorzugsweise gleichzeitig in einem Montageschritt vernietet. Entsprechendes gilt für das viertgrößte Kettenrad 140, welches bereits mit der fertig montierten Unterbaugruppe 100 in Figur 5a und 5b beschrieben wurde.

Das erfinderische Konzept könnte auch darin gesehen werden, mindestens ein erstes großes Kettenrad 110 und ein drittes große Kettenrad 130 an einem Ritzelträger 90 zu befestigen, wobei die Kettenräder 110, 130 an der Außenperipherie Zähne 113, 133 aufweisen und wobei das kleinere Kettenrad 130 dieser zwei Kettenräder 110, 130 an einer ersten Anzahl von Armen 91 des Ritzelträgers 90 befestigt ist und der wesentliche Anteil der durch die Kettenzugskraft einer an den Zähnen 113 des Kettenrades 110 angreifenden Kette eingeleiteten Spannungen über die Arme 91 des Ritzelträgers 90 zu dem Profil zur Drehmomentübertragung 93 an der inneren Peripherie des Ritzelträgers 90 weitergeleitet wird, wobei das größere dieser zwei Kettenräder 110, 130 an einer gegenüber der ersten Anzahl größeren zweiten Anzahl von Nietaufnahmelöcher 90.1 an der Außen-Peripherie des Ritzelträgers 90 befestigt ist, und die durch die Kettenzugskraft einer an den Zähnen 113 des Kettenrades 110 angreifenden Kette eingeleiteten Spannungen zu einem Profil zur Drehmomentübertragung 93 an der inneren Peripherie des Ritzelträgers 90 weitergeleitet werden. Der Ritzelträger 90 verhält sich dabei wie eine kreisrunde Scheibe mit Armen 91. Die Durchbrüche 94 dienen der Gewichtsersparnis. Die Einprägungen auf der Innenseite 90b des Ritzelträgers 90 bilden mindestens eine Trägerstufe 92.3 zur Steigerung der Stabilität.

Figuren 9a bis 9f zeigen verschiedene Ansichten des erfindungsgemäßen Kettenradträgers 90, der als kostengünstiges Stanz-Umformteil mit im Wesentlichen gleicher Wandstärke d2 ausgebildet wird. Die Materialdicke d2 muss dabei ausreichend stabil bezüglich axial wirkender Kräfte bemessen sein.

Figur 9a zeigt die Außenseite 90a und Figur 9b die Innenseite 90b des erfindungsgemäßen Kettenradträgers 90. Der Träger 90 weist an seinem radial inneren Ende ein Profil zur Drehmomentübertragung 93 auf. Benachbart dazu befindet sich ein Innenring 96. Von dem Profil 93 erstrecken sich fünf Trägerarme 91 radial nach außen. Die Trägerarme 91 sind an ihren radial äußeren Enden durch einen Außenring 95 verbunden. Vom Außenring 95 erstrecken sich zehn Trägervorsprünge 98 nach radial außen. Jeder zweite Trägervorsprung 98 ist im Bereich eines Trägerarms 91 angeordnet. Die übrigen fünf Trägervorsprünge 98 sind jeweils zwischen zwei benachbarten Trägerarmen 91 angeordnet. Von diesen fünf zwischen den Trägerarmen 91 angeordneten Trägervorsprüngen 98 erstrecken sich fünf Trägerstege 97 in Richtung des nächsten Trägerarms 91. Eine Vielzahl von Materialdurchbrüchen 94 entlang der Trägerarme 91 und zwischen benachbarten Trägerarmen 91 reduziert das Gewicht des Trägers 90.

Die Trägervorsprünge 98 sind auf der Innenseite 90b eingeprägt und bilden die erste Trägerstufe 92.1 zur Anbringung des größten Ritzels 110. Die gegenüberliegende Außenseite 90a der Vorsprünge 98 bildet die zweite Trägerstufe 92.2 zur Anbringung des zweiten Ritzels 120. Das erste und zweite Kettenrad 110, 120 werden mittels Nieten 210 durch die Nietaufnahmelöcher 99.1 befestigt. Weitere Nietaufnahmelöcher 99.3 und 99.4 befinden sich auf der dritten und vierten Trägerstufe 92.3 und 92.4. Die demselben Trägerarm 91 zugeordneten Nietaufnahmelöcher 99.1, 99.3 und 99.4 sind in Umfangsrichtung versetzt zueinander angeordnet. Sie liegen also nicht auf einem Radialstrahl, sondern sind versetzt zu diesem angeordnet.

Die Figuren 9c und 9d zeigen eine perspektivische Außenansicht und Innenansicht des erfindungsgemäßen Kettenradträgers 90. Die durch Umformen des ursprünglich flachen Blechs mit einer Materialstärke d2 erzeugten Stufen und unterschiedlichen Niveaus werden am besten in den perspektivischen Ansichten in Figur 9c und 9d und in den Schnittansichten 9e und 9f sichtbar. Die Materialstärke d2 des Trägers 90 ist zwar auch nach dem Verformen im Wesentlichen gleich, jedoch hat sich die axiale Gesamthöhe d4 des Trägers 90 von der ursprünglichen Stärke d2 zumindest verdoppelt, insbesondere verdreifacht oder vervierfacht.

Aufgrund der eingeprägten Trägerstufen 92.1, 92.2, 92.3 und 92.4 können vier Ritzel 110-140 direkt am Ritzelträger 90 montiert werden. Die unterschiedlichen Niveaus der Stufen definieren die Abstände zwischen den Ritzeln, ohne dass weitere Bauteile wie Distanzhülsen benötigt werden. Die verschieden Einprägungen in Form von Trägerstufen 92 und anderen Verformungen entlang der Trägerarme 91 stellen die benötigte Stabilität des Trägers 90 her.

Figur 9e zeigt die Schnittansicht I-I gemäß Figur 9a und vergrößerte Detailansichten A und D des erfindungsgemäßen Kettenradträgers 90. Im gezeigten Ausführungsbeispiel ist die ursprüngliche Materialstärke d2 mit etwa 3mm bemessen. Aufgrund der Einprägung 92.5 auf der Außenseite 90a des Trägers 90 im Bereich des Innenrings 96 und der damit verbundenen Materialverdrängung lässt sich die Materialstärke d6 im Bereich des Profils zur Drehmomentübertragung 93 auf ein Maß von etwa 4 mm leicht erhöhen vgl. Detail D. Detail A zeigt die deutlich vergrößerte axiale Gesamthöhe d4 des Trägers 90 mit etwa 11 mm, gemessen von der axialen Innenseite des Trägers 90 bis zum Niveau der vierten Trägerstufe 92.4. Auf der vierten Trägerstufe 92.4 wird das viertgrößte Ritzel 140 befestigt. Der Trägervorsprung 98 ist auf seiner axialen Innenseite eingeprägt.

Figur 9f zeigt die Schnittansicht II-II gemäß Figur 9a und vergrößerte Detailansichten B und C des erfindungsgemäßen Kettenradträgers 90.

Detail C zeigt einen Trägervorsprung 98, dessen Materialstärke d1 aufgrund der Einprägung auf der axialen Innenseite gegenüber der ursprünglichen Materialstärke D2 leicht reduziert ist. Auf der eingeprägten Innenseite des Vorsprungs 98 ergibt sich die erste Trägerstufe 92.1, auf der das größte Ritzel 110 angeordnet wird. Auf der gegenüberliegenden Außenseite des Vorsprungs 98 wird das zweitgrößte Ritzel 120 auf der zweiten Trägerstufe 92.2 angeordnet. Detail B zeigt die dritte Trägerstufe 92.3 mit einer Höhe d3 von etwa 7 mm zur Befestigung des drittgrößten Ritzels 130 und die darüber liegende vierte Trägerstufe 92.4.

Der Träger 90 weist einerseits eine im Wesentlichen gleichbleibende, relative dünne Materialstärke d1, d2, d6 von etwa 2 mm bis 4 mm auf, was zu einem geringen Gewicht führt. Andererseits werden im Stanz-Biegeverfahren durch Umformen verschiedene Trägerstufen und Niveaus erzeugt, die zu einer gegenüber der Materialstärke stark erhöhten axialen Gesamthöhe d3, d4 und einer großen Stabilität des Trägers 90 führen. Im Vergleich dazu sind herkömmliche Ritzelträger massiver und schwerer ausgebildet.

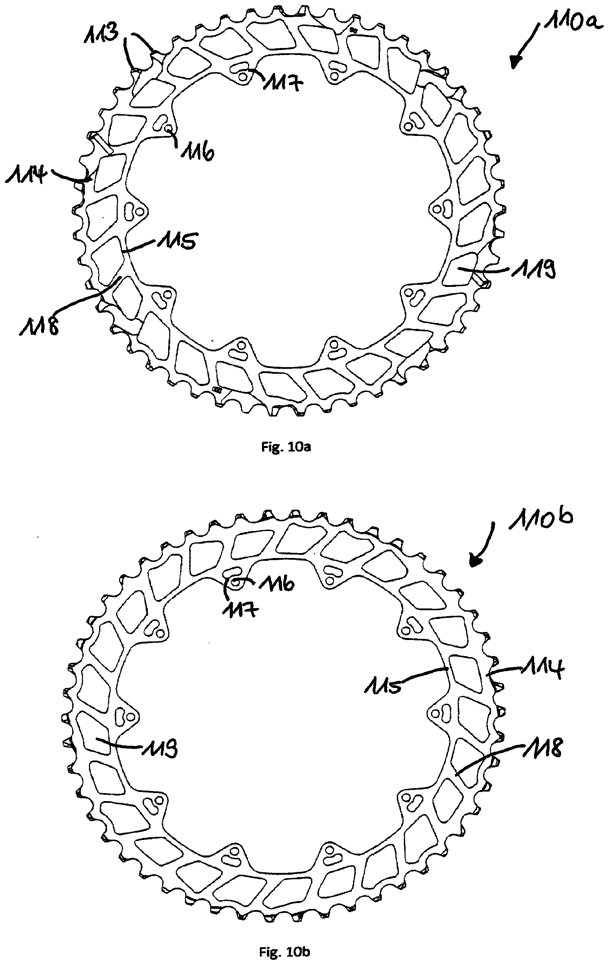

Figuren 10a und 10b zeigen die Außenseite 110a und die Innenseite 110b des größten, ringförmigen Kettenrads 110. Das Kettenrad weist an seinem radial äußeren Umfang einen Außenring 114 mit einer Anzahl von 50 Zähnen 113 auf. An seinem radial inneren Umfang ist ein Innenring 115 gebildet. Zwischen dem Außen- und Innenring 114, 115 erstreckt sich eine Vielzahl von Kettenradstegen 118. Die Kettenradstege 118 verlaufen in der Außenansicht in Figur 10a gesehen vom Außenring 114 nach schräg vorne zum Innenring 115. In anderen Worten liegt in Drehrichtung D gesehen das radial innere Ende des Kettenradstegs 118 weiter vorne als das radial äußere Ende des Kettenradstegs 118. Durch diese Ausrichtung wirken die Stege 118 wie Druckstäbe und können Kräfte und Spannungen, die von der Kette 20 auf das Kettenrad 110 übertragen werden, aufnehmen und nach radial innen in Richtung des Trägers weiterleiten. Zwischen den Stegen 118 sind Durchbrüche 119 angeordnet. Am radial inneren Ende des Kettenrads 110 erstrecken sich vom Innenring 115 nach radial innen zehn Kettenradvorsprünge 117 mit jeweils einem Nietaufnahmeloch 116. Durch diese Nietaufnahmelöcher 116 werden die Nieten 210 zur Befestigung des größten Kettenrads 110 am Träger 90 geführt.

Jeder fünfte der Vielzahl von Kettenradstegen 118 des Kettenrads 110 verläuft auf etwa derselben Linie wie die fünf Stege 97 des Trägers 90. Die Stege 97 des Trägers 90 bilden sozusagen eine Verlängerung der Kettenradstege 118. Kettenzugkräfte, die radial außen in das größte Kettenrad 110 eingeleitet werden, werden zunächst über die Kettenradstege 118 und anschließend direkt über die fünf Trägerarme 91 und/oder indirekt über die fünf Trägerstege 91 in die fünf Trägerarme 91 in Richtung Trägerprofil 93 weitergeleitet (vgl. auch Figur 6a).

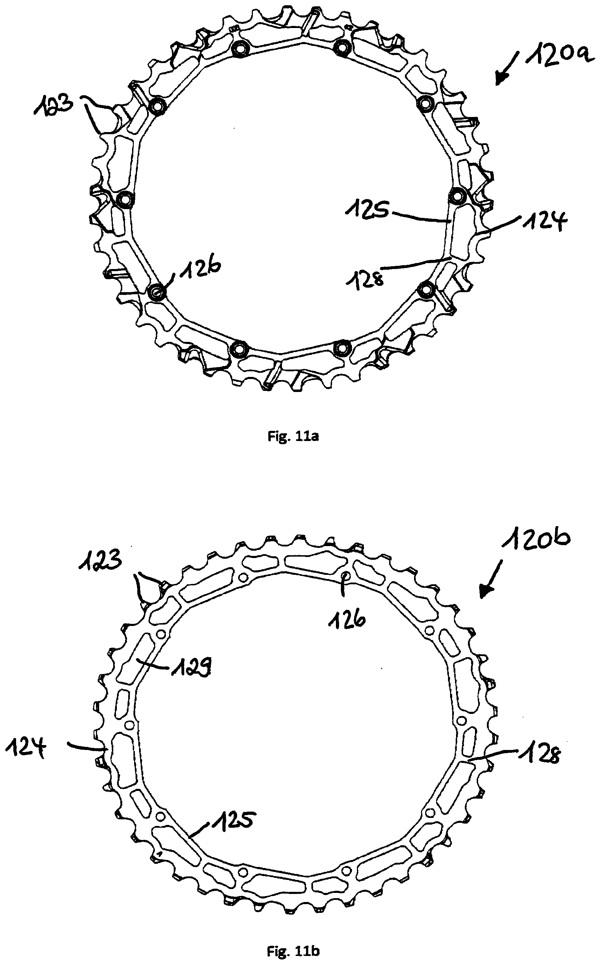

Figur 11a zeigt eine Außenseite 120a des zweitgrößten Kettenrads 120 mit einer Anzahl von 42 Zähnen 123. Figur 11b zeigt die Innenseite 120b mit zehn Nietaufnahmelöchern 126. Ähnlich wie beim Kettenrad 110 verhält es sich mit den Kettenzugkräften, die in das zweitgrößte Kettenrad 120 eingeleitet werden. Auch am zweitgrößten Kettenrad 120 werden die Kräfte vom Außenring 124 über die Kettenradstege 128 auf den Innenring 125 geleitet und auf den Träger 90 übertragen. Jede zweite der zehn Nietverbindungen zwischen dem größten Ritzel 110 und dem Träger 90 liegt im Bereich eines Trägerarms 91. Die übrigen fünf Nietverbindungen zwischen dem größten Ritzel 110 und dem Träger 90 liegen im Bereich der äußeren radialen Enden der Trägerstäbe 97. Diese Anordnung sorgt für eine möglichst stabile Verbindung (vgl. Figur 6a). Entsprechendes gilt natürlich auch für die Nietverbindungen zwischen dem zweitgrößten Ritzel 120 und dem Träger 90 (vgl. auch Figur 7).

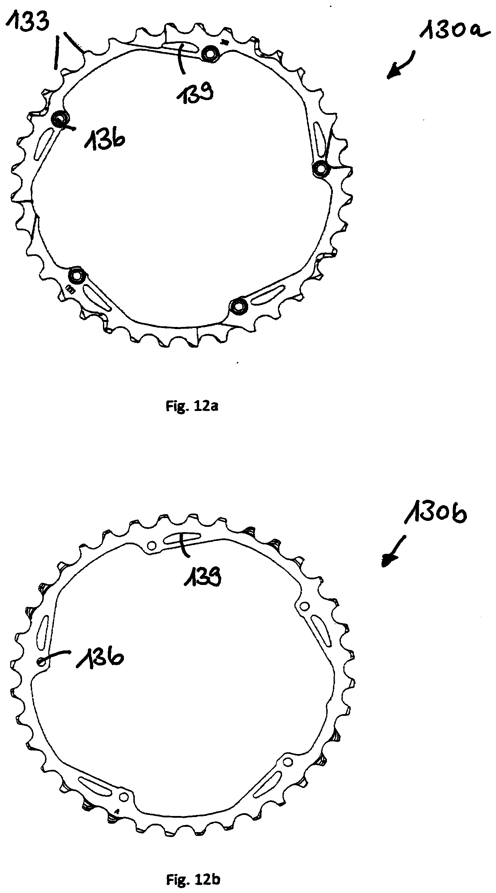

Figuren 12a und 12b zeigen eine Außenansicht 130a und eine Innenansicht 130b des drittgrößten Kettenrads 130 mit einer Anzahl von 36 Zähnen 133 und Durchbrüchen 139.

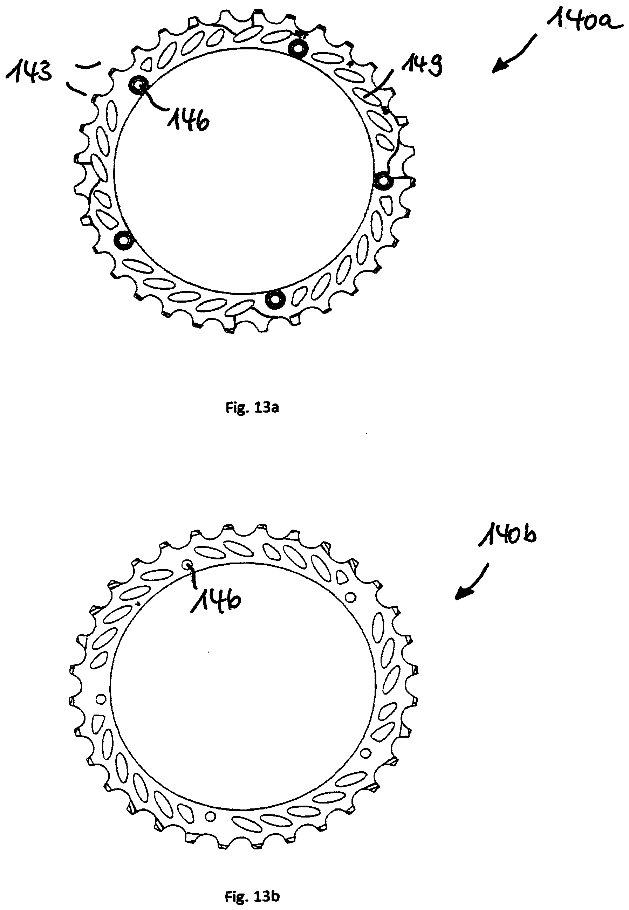

Figuren 13a und 13b zeigen entsprechend die Außenseite 140a und die Innenseite 140b des viertgrößten Kettenrads 140 mit 32 Zähnen 143 und einer Vielzahl von Durchbrüchen 149.

Das drittgrößte und das viertgrößte Kettenrad 130, 140 weisen nur noch jeweils fünf Nietaufnahmelöcher 136, 146 auf. Die Nietaufnahmelöcher 136, 146 weisen auf der Kettenradaußenseite jeweils Ansenkungen auf, in denen die Nietköpfe zum Teil aufgenommen werden, damit sie in axialer Richtung nicht mit der Kette kollidieren.

Optional könnten die Kettenräder auch massiv, also ohne die Durchbrüche ausgebildet sein. Das würde zu noch mehr Stabilität, aber auch mehr Gewicht führen. Die Ritzel sind aus (gehärtetem) Stahl gefertigte herkömmliche Stanzteile. Dies ermöglicht eine besonders günstige Fertigung. Jedoch sind auch andere Materialien wie Aluminium denkbar. Auf weitere bekannte Details der Ritzel, wie unterschiedliche Zahnformen, Zahndicken und Schaltgassen wird nicht näher eingegangen.

## Patentansprüche

1. Kettenradträger (90) für eine Mehrfach-Kettenradanordnung (10) zur drehbaren Montage an einer Hinterradachse (A),
wobei der Kettenradträger (90) eine im Wesentlichen gleiche Materialstärke (d2) aufweist,
und der Kettenradträger (90) so ausgebildet ist, dass zumindest drei große Kettenräder (110, 120, 130) direkt an dem Kettenradträger (90) befestigbar sind, der Träger (90) an einem radial inneren Ende ein Profil (93) zur Drehmomentübertragung und in radialer Richtung benachbart dazu einen Innenring (96) aufweist, wobei das Profil (93) zum drehmomentübertragenden Eingriff in ein entsprechendes Profil an einem Antreiber (50) ausgebildet ist, **dadurch gekennzeichnet, dass** eine axiale Gesamtbreite (d4) des Kettenradträgers (90) durch Umformen zumindest doppelt, insbesondere dreifach oder vierfach so groß ist wie die ursprüngliche, im Wesentlichen gleiche Materialstärke (d2) des Kettenradträgers (90).

2. Kettenradträger (90) nach dem vorhergehenden Anspruch,
wobei der Träger (90) eine Mehrzahl von Trägerarmen (91) aufweist, die an einem radial äußeren Ende des Trägers (90) durch einen Außenring (95) verbunden sind.

3. Kettenradträger (90) nach Anspruch 2,
wobei sich die Trägerarme (91) zwischen dem Innenring (96) und dem Außenring (95) in radialer Richtung erstrecken.

4. Kettenradträger (90) nach Anspruch 2 oder 3,
wobei der Träger (90) am radial äußeren Ende bzw. entlang des Außenrings (95) eine Mehrzahl von Trägervorsprüngen (98) aufweist, die sich nach radial außen erstrecken.

5. Kettenradträger (90) nach einem der Ansprüche 2 bis 4,
wobei der Träger (90) eine Mehrzahl von Stegen (97) zur Abstützung aufweist, welche sich zwischen dem Außenring (95) und dem Innenring (96) erstrecken.

6. Kettenrad-Unterbaugruppe (100) für eine Mehrfach-Kettenradanordnung (10) zur drehbaren Montage an einer Hinterradachse (A) und zum Eingriff in eine Fahrradkette (20), umfassend:
- einen Kettenradträger (90) nach einem der vorhergehenden Ansprüche, und
- zumindest drei an dem Träger (90) montierbare große Kettenräder (110, 120, 130) mit unterschiedlichen Zähnezahlen.

7. Kettenrad-Unterbaugruppe (100) nach Anspruch 6,
wobei der Träger (90) aufweist:
- erste Trägerstufen (92.1) zur Anbringung des größten Kettenrads (110) auf einer axialen Innenseite (90b) einer Mehrzahl von Trägervorsprüngen (98),
- zweite Trägerstufen (92.2) zur Anbringung des zweitgrößten Kettenrads (120) auf einer axialen Außenseite (90a) der Mehrzahl von Trägervorsprüngen (98), und
- dritte Trägerstufen (92.3) zur Anbringung des drittgrößten Kettenrads (130) auf der Trägeraußenseite (90a) im Bereich der radial äußeren Enden einer Mehrzahl von Trägerarmen (91).

8. Kettenrad-Unterbaugruppe (100) nach Anspruch 7,
wobei die Kettenrad-Unterbaugruppe (100) ein viertes Kettenrad (140) umfasst, und der Träger (90) vierte Trägerstufen (92.4) zur Anbringung des viertgrößten Kettenblatts (140) auf der Trägeraußenseite (90a) im Bereich der radial äußeren Enden der Trägerarme (91) aufweist.

9. Kettenrad-Unterbaugruppe (100) nach Anspruch 8,
wobei die Trägerstufen (92.1, 92.2, 92.3, 92.4) in axialer Richtung auf jeweils unterschiedlichen Niveaus liegen.

10. Kettenrad-Unterbaugruppe (100) nach Anspruch 8 oder 9,
wobei die Trägerstufen (92.1, 92.3, 92.4) jeweils ein Nietaufnahmeloch (99.1, 99.3, 99.4) aufweisen und diese in Umfangsrichtung versetzt zueinander angeordnet sind.

11. Kettenrad-Unterbaugruppe (100) nach einem der Ansprüche 6 bis 10,
wobei das erste Kettenrad (110) entlang seines radial äußeren Umfangs einen Außenring (114) mit einer Mehrzahl von Zähnen (113) und an seinem radial inneren Ende einen Innenring (115) aufweist.

12. Kettenrad-Unterbaugruppe (100) nach Anspruch 11,
wobei sich eine Mehrzahl von Kettenradstegen (118) von dem Außenring (114) zum Innenring (115) erstrecken.

13. Kettenrad-Unterbaugruppe (100) nach Anspruch 11 oder 12,
wobei sich entlang des Innenrings (115) eine Mehrzahl von Kettenradvorsprüngen (117) mit jeweils einem Nietaufnahmeloch (116) nach radial innen erstrecken.

14. Mehrfach-Kettenradanordnung (10) zur drehbaren Montage an einer Hinterradachse (A) und zum Eingriff in eine Fahrradkette (20), umfassend:
eine Kettenrad-Unterbaugruppe (100) nach einem der vorhergehenden Ansprüche 7 bis 13 und eine Mehrzahl von weiteren Kettenrädern (151-158).

15. Mehrfach-Kettenradanordnung (10) nach Anspruch 14,
wobei die Mehrfach-Kettenradanordnung (10) insgesamt zumindest elf Kettenräder, insbesondere zwölf oder dreizehn Kettenräder, umfasst.

16. Mehrfach-Kettenradanordnung (10) nach Anspruch 14 oder 15,
wobei das größte Kettenrad (110) zumindest 48 Zähne, insbesondere 50 oder 51 Zähne aufweist, und das kleinste Kettenrad (151) höchstens elf Zähne, insbesondere zehn oder neun Zähne aufweist.

## Claims

1. Chain wheel carrier (90) for a multiple chain wheel arrangement (10) for rotatable mounting on a rear wheel axle (A),
wherein the chain wheel carrier (90) has a substantially identical material thickness (d2), and the chain wheel carrier (90) is formed so that at least three large chain wheels (110, 120, 130) can be fastened directly to the chain wheel carrier (90),
the carrier (90) has, at a radially inner end, a profile (93) for the transmission of torque and, adjacent thereto in the radial direction, an inner ring (96), wherein the profile (93) is configured for torque-transmitting engagement into a corresponding profile on a driver (50), **characterized in that**, as a result of forming, an axial total width (d4) of the chain wheel carrier (90) has at least doubled, in particular tripled or quadrupled from the original, substantially identical material thickness (d2) of the chain wheel carrier (90).

2. Chain wheel carrier (90) according to the preceding claim,
wherein the carrier (90) has a plurality of carrier arms (91) which are connected at a radially outer end of the carrier (90) by an outer ring (95).

3. Chain wheel carrier (90) according to Claim 2,
wherein the carrier arms (91) extend between the inner ring (96) and the outer ring (95) in the radial direction.

4. Chain wheel carrier (90) according to Claim 2 or 3, wherein the carrier (90) has, at the radially outer end or along the outer ring (95), a plurality of carrier projections (98) which extend radially to the outside.

5. Chain wheel carrier (90) according to any one of Claims 2 to 4,
wherein the carrier (90) has a plurality of webs (97) for support which extend between the outer ring (95) and the inner ring (96).

6. Chain wheel sub-assembly (100) for a multiple chain wheel arrangement (10) for rotatable mounting on a rear wheel axle (A) and for engagement in a bicycle chain (20), comprising:
- a chain wheel carrier (90) according to any one of the preceding claims, and
- at least three large chain wheels (110, 120, 130) which can be mounted on the carrier (90) with different numbers of teeth.

7. Chain wheel sub-assembly (100) according to Claim 6,
wherein the carrier (90) has:
- first carrier steps (92.1) for attachment of the largest chain wheel (110) on an axial inner side (90b) of a plurality of carrier projections (98),
- second carrier steps (92.2) for attachment of the second largest chain wheel (120) on an axial outer side (90a) of the plurality of carrier projections (98), and
- third carrier steps (92.3) for attachment of the third largest chain wheel (130) on the carrier outer side (90a) in the region of the radially outer ends of a plurality of carrier arms (91).

8. Chain wheel sub-assembly (100) according to Claim 7,
wherein the chain wheel sub-assembly (100) comprises a fourth chain wheel (140), and
the carrier (90) has fourth carrier steps (92.4) for attachment of the fourth largest chain ring (140) on the carrier outer side (90a) in the region of the radially outer ends of the carrier arms (91).

9. Chain wheel sub-assembly (100) according to Claim 8,
wherein the carrier steps (92.1, 92.2, 92.3, 92.4) lie on respectively different levels in the axial direction.

10. Chain wheel sub-assembly (100) according to Claim 8 or 9,
wherein the carrier steps (92.1, 92.3, 92.4) have in each case a rivet receiving hole (99.1, 99.3, 99.4) and these are arranged offset to one another in the circumferential direction.

11. Chain wheel sub-assembly (100) according to any one of Claims 6 to 10,
wherein the first chain wheel (110) has, along its radially outer circumference, an outer ring (114) with a plurality of teeth (113) and, at its radially inner end, an inner ring (115).

12. Chain wheel sub-assembly (100) according to Claim 11,
wherein a plurality of chain wheel webs (118) extend from the outer ring (114) to the inner ring (115).

13. Chain wheel sub-assembly (100) according to Claim 11 or 12,
wherein a plurality of chain wheel projections (117) with in each case one rivet receiving hole (116) extend radially inwards along the inner ring (115).

14. Multiple chain wheel arrangement (10) for rotatable mounting on a rear wheel axle (A) and for engagement in a bicycle chain (20), comprising:
a chain wheel sub-assembly (100) according to any one of preceding Claims 7 to 13 and a plurality of further chain wheels (151-158).

15. Multiple chain wheel arrangement (10) according to Claim 14,
wherein the multiple chain wheel arrangement (10) comprises a total of at least eleven chain wheels, in particular twelve or thirteen chain wheels.

16. Multiple chain wheel arrangement (10) according to Claim 14 or 15,
wherein the largest chain wheel (110) has at least 48 teeth, in particular 50 or 51 teeth, and the smallest chain wheel (151) has at most eleven teeth, in particular ten or nine teeth.

## Revendications

1. Support de roues à chaîne (90) pour un agencement de roues à chaîne multiples (10) pour le montage rotatif sur un essieu arrière (A),
le support de roues à chaîne (90) présentant une épaisseur de matériau (d2) essentiellement identique,
et le support de roues à chaîne (90) étant configuré de telle sorte qu'au moins trois grandes roues à chaîne (110, 120, 130) puissent être fixées directement sur le support de roues à chaîne (90),
le support (90) comprenant, à une extrémité radialement intérieure, un profilé (93) pour le transfert de couple et, en position voisine de celui-ci dans la direction radiale, un anneau intérieur (96), le profilé (93) étant configuré pour l'engagement avec transfert de couple dans un profilé correspondant sur un entraîneur (50), **caractérisé en ce qu'**une largeur axiale totale (d4) du support de roues à chaîne (90) est au moins deux fois, notamment trois fois ou quatre fois, plus grande par déformation que l'épaisseur de matériau initiale (d2), essentiellement identique, du support de roues à chaîne (90).

2. Support de roues à chaîne (90) selon la revendication précédente, dans lequel le support (90) comprend une pluralité de bras de support (91), qui sont reliés à une extrémité radialement extérieure du support (90) par un anneau extérieur (95).

3. Support de roues à chaîne (90) selon la revendication 2, dans lequel les bras de support (91) s'étendent entre l'anneau intérieur (96) et l'anneau extérieur (95) dans la direction radiale.

4. Support de roues à chaîne (90) selon la revendication 2 ou 3, dans lequel le support (90) comprend, à l'extrémité radialement extérieure ou le long de l'anneau extérieur (95), une pluralité de protubérances de support (98), qui s'étendant radialement vers l'extérieur.

5. Support de roues à chaîne (90) selon l'une quelconque des revendications 2 à 4, dans lequel le support (90) comprend une pluralité d'entretoises (97) pour le soutien, qui s'étendent entre l'anneau extérieur (95) et l'anneau intérieur (96).

6. Sous-ensemble de roues à chaîne (100) pour un agencement de roues à chaîne multiples (10) pour le montage rotatif sur un essieu arrière (A) et pour l'engagement dans une chaîne de bicyclette (20), comprenant :
- un support de roues à chaîne (90) selon l'une quelconque des revendications précédentes, et
- au moins trois grandes roues à chaîne (110, 120, 130) pouvant être montées sur le support (90), ayant des nombres de dents différents.

7. Sous-ensemble de roues à chaîne (100) selon la revendication 6, dans lequel le support (90) comprend :
- des premiers étages de support (92.1) pour la disposition de la roue à chaîne la plus grande (110) sur un côté intérieur axial (90b) d'une pluralité de protubérances de support (98),
- des deuxièmes étages de support (92.2) pour la disposition de la deuxième roue à chaîne la plus grande (120) sur un côté extérieur axial (90a) de la pluralité de protubérances de support (98), et
- des troisièmes étages de support (92.3) pour la disposition de la troisième roue à chaîne la plus grande (130) sur le côté extérieur de support (90a) dans la zone des extrémités radialement extérieures d'une pluralité de bras de support (91).

8. Sous-ensemble de roues à chaîne (100) selon la revendication 7, dans lequel le sous-ensemble de roues à chaîne (100) comprend une quatrième roue à chaîne (140), et le support (90) comprend des quatrièmes étages de support (92.4) pour la disposition du quatrième plateau le plus grand (140) sur le côté extérieur de support (90a) dans la zone des extrémités radialement extérieures des bras de support (91).

9. Sous-ensemble de roues à chaîne (100) selon la revendication 8, dans lequel les étages de support (92.1, 92.2, 92.3, 92.4) se situent respectivement à des niveaux différents dans la direction axiale.

10. Sous-ensemble de roues à chaîne (100) selon la revendication 8 ou 9, dans lequel les étages de support (92.1, 92.3, 92.4) comprennent respectivement un trou de réception de rivet (99.1, 99.3, 99.4) et ceux-ci sont agencés en décalage les uns par rapport aux autres dans la direction circonférentielle.

11. Sous-ensemble de roues à chaîne (100) selon l'une quelconque des revendication 6 à 10, dans lequel la première roue à chaîne (110) comprend un anneau extérieur (114) muni d'une pluralité de dents (113) le long de sa circonférence radialement extérieure et un anneau intérieur (115) à son extrémité radialement intérieure.

12. Sous-ensemble de roues à chaîne (100) selon la revendication 11, dans lequel une pluralité d'entretoises de roue à chaîne (118) s'étendent depuis l'anneau extérieur (114) jusqu'à l'anneau intérieur (115) .

13. Sous-ensemble de roues à chaîne (100) selon la revendication 11 ou 12, dans lequel une pluralité de protubérances de roue à chaîne (117) respectivement munies d'un trou de réception de rivet (116) s'étendent radialement vers l'intérieur le long de l'anneau intérieur (115).

14. Agencement de roues à chaîne multiples (10) pour le montage rotatif sur un essieu arrière (A) et pour l'engagement dans une chaîne de bicyclette (20), comprenant :
un sous-ensemble de roues à chaîne (110) selon l'une quelconque des revendications 7 à 13 précédentes et une pluralité de roues à chaîne supplémentaires (151 à 158) .

15. Agencement de roues à chaîne multiples (10) selon la revendication 14, dans lequel l'agencement de roues à chaîne multiples (10) comprend au total au moins onze roues à chaîne, notamment douze ou treize roues à chaîne.

16. Agencement de roues à chaîne multiples (10) selon la revendication 14 ou 15, dans lequel la plus grande roue à chaîne (110) comprend au moins 48 dents, notamment 50 ou 51 dents, et la plus petite roue à chaîne (151) comprend au plus onze dents, notamment dix ou neuf dents.
